(19) Europäisches Patentamt
European Patent Office
Office européen des brevets

(11) Publication number : 0 393 490 B1

(12) **EUROPEAN PATENT SPECIFICATION**

(45) Date of publication of patent specification : **06.10.93 Bulletin 93/40**

(51) Int. Cl.$^5$ : **C09K 19/42,** G02F 1/137

(21) Application number : **90106962.5**

(22) Date of filing : **11.04.90**

(54) **Liquid crystal composition and liquid crystal display element.**

(30) Priority : **17.04.89 JP 97228/89**
**11.12.89 JP 321218/89**

(43) Date of publication of application :
**24.10.90 Bulletin 90/43**

(45) Publication of the grant of the patent :
**06.10.93 Bulletin 93/40**

(84) Designated Contracting States :
**AT BE CH DE FR GB IT LI LU NL SE**

(56) References cited :
**EP-A- 0 316 186**
**GB-A- 2 118 934**
**US-A- 4 261 651**
**US-A- 4 778 620**
**US-A- 4 816 180**
**US-A- 4 877 549**

(73) Proprietor : **Chisso Corporation**
**6-32, Nakanoshima 3-chome Kita-ku**
**Osaka-shi Osaka-fu (JP)**

(72) Inventor : **Sawada, Shininchi**
**8890, Goi**
**Ichihara-shi, Chiba-ken (JP)**
Inventor : **Fukuda, Akiko**
**8890, Goi**
**Ichihara-shi, Chiba-ken (JP)**

(74) Representative : **Hansen, Bernd, Dr. Dipl.-Chem. et al**
**Hoffmann, Eitle & Partner Patent- und Rechtsanwälte, Postfach 81 04 20**
**D-81904 München (DE)**

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Jouve, 18, rue Saint-Denis, 75001 PARIS

## Description

This invention relates to a liquid crystal composition for liquid crystal displays. More particularly it relates to a liquid crystal composition used for high multiplex display devices making use of supertwisted birefringence effect mode.

With rapid development of recent information devices, particularly growth of portable terminal devices, display devices of small size, thin shape and low power consumption, having a display capacity and a display quality matching those of conventional CRT have been required. In response to the above-mentioned needs for small size, thin shape and lower power consumption, liquid crystal devices capable of multiplex drive by means of TN type liquid crystal cells having a twist angle of 90°, have so far been used in the form of display terminals up to about $^1/_{100}$ duty for watches, electronic calculators, etc. However, an increase of the duty number to more than the above has been regarded as difficult in principle, since it reduces the display quality.

Whereas, there has been known a supertwisted birefringence effect mode making use of the birefringence effect of liquid crystal cells, having set the twist angle to 180-270°, at which the bistability in the electrooptical characteristic of chiral nematic liquid crystals occurs to the utmost. This mode is a supertwisted birefringence effect mode using an organic aligned membrane, and hereinafter abbreviated to SBE mode, including modes called STN mode and HBE mode. According to this SBE mode, the same drive method as in the matrix display of conventional TN mode of 90° twist, that is, the matrix display driven according to the first scan-addressing mode replying to the effective value of impressed voltage is possible, and also a considerably better contrast and a broader viewing angle than those in the case of TN display of 90° twist can be afforded (T.J. Scheffer,J. Nehring; Appl. Phys. Letter, 45, 1021 (1984)).

With reference to liquid crystal materials, in order to make the voltage-transmittance characteristic curve steep in the case of conventional 90° twist TN mode, it is necessary to make the elastic constant ratio $K_{33}/K_{11}$ of liquid crystal materials as low as possible. This is evident for example from the report of G. Baur {The Physics and Chemistry of Liquid Crystal Devices (edited by G.J. Sprokel), pp 61-78 (1980)}. However, in order to make the voltage-transmittance characteristic curve steep in the case of SBE mode, it is necessary to make the ratio $K_{33}/K_{11}$ as large as possible contrary to the case of 90° twist TN mode. Further, it is preferred that the ratio $K_{33}/K_{22}$ be also larger. This is evident e.g. from the report of C.M. Waters (Design of Highly Multiplexed Liquid Crystal Dye Displays, Mol. Cryst. Liq. Cryst., 1985, vol. 123, pp 303-319). Here, $K_{11}$, $K_{22}$ and $K_{33}$ represent a splay elastic constant, a twist one and a bend one, respectively, in the continiuum Theory (F. Frank: Dix. Faraday Soc., 25, p 19 (1956)).

Namely, as described above, the physical property value for making the voltage-transmittance characteristic curve steep, i.e. the elastic constant ratio $K_{33}/K_{11}$ in the case of 90° twist TN mode is quite contrary to that in the case of SBE mode. Thus, it can be seen that liquid crystal compositions so far used in the 90° twist TN mode are unsuitable for making the voltage-transmittance characteristic curve steep in the SBE mode.

The main object of the present invention is to provide a liquid crystal composition suitable to liquid crystal display elements of SBE mode for making the voltage-transmittance characteristic curve steep, taking into account the above-mentioned theoretical background and the practical needs for liquid crystal display element.

Characteristics required for liquid crystal compositions used for the display elements of SBE mode are as follows:

(1) steep voltage-transmittance characteristic curve;

(2) high nematic-isotropic liquid phase transition point;

(3) capability of taking a suitable optical anisotropy value (hereinafter abbreviated to $\Delta n$) in accordance with the cell thickness (hereinafter abbreviated to d);

(4) low viscosity (hereinafter abbreviated to $\eta$); etc.

The characteristic (1) is indispensable for enhancing the display contrast of liquid crystal display elements of SBE mode.

The characteristic (2) is necessary for inhibiting the display from coloring occurrence due to the temperature-dependency of $\Delta n$ in SBE mode, and a clearing point (hereinafter abbreviated to NI point) is desired to be as high as possible. The $\Delta n$ value generally draws a curve slowly lowering from the lower temperature side toward the higher temperature side, but it begins to rapidly lower in the vicinity of the clearing point, and the display color changes when the light path length of birefringence ($\Delta n \cdot d$) changes notably. Further, when it reaches NI point,$\Delta n$=0, that is, an isotropic liquid is formed to lose the function as liquid crystal display elements. A practical NI point for display elements is preferred to be 80°C or higher.

The characteristic (3) is important for enhancing the degree of freedom of the cell thickness of liquid crystal display elements. SBE mode uses as its display, an interference color due to the birefringence effect based upon the light path length ($\Delta n \cdot d$)=constant) of birefringence, differently from TN mode. Thus, it is preferred to be able to take various $\Delta n$ values corresponding to an optional d.

The characteristic (4) is particularly advantageous for reducing the response time in the liquid crystal cells of SBE mode. It is known that as to the response time in TN mode, the rise time and decay time are both proportional to $\eta \cdot d^2$. This relationship is also applicable to SBE mode.

SUMMARY OF THE INVENTION

An object of the present invention is to provide a nematic liquid crystal composition not only having a high clearing point and a low viscosity and capable of taking a desired $\Delta n$ value, but also having improved the steepness in the voltage-transmittance characteristic curve in the SBE mode display.

Another object of the present invention is to provide a liquid crystal display element having a steepness in the voltage-transmittance curve and a good contrast in the SBE mode.

The present inventors have made extensive research for solving the above-mentioned problems, and as a result have found that a liquid crystal composition obtained by mixing a first component comprising a compound expressed by the formula (I) mentioned later with a second component comprising a compound expressed by the formula (II) mentioned later, or additionally mixing the first and second components with a third component comprising a group of compounds expressed by the formulas (III) and (IV) mentioned later, or further additionally mixing the first, second and third components with a fourth component comprising a compound expressed by the formula (V) mentioned later can improve the above-mentioned characteristics to a large extent, and thus have achieved the present invention.

Namely, the liquid crystal composition in the first aspect of the present invention is characterized by comprising as indispensable components, a first component comprising at least one member of compounds expressed by the formula

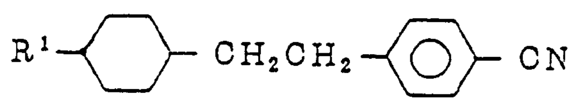

( I )

wherein $R^1$ represents an alkyl group of 1 to 10 carbon atoms, and a second component comprising at least one member of compounds expressed by the formula

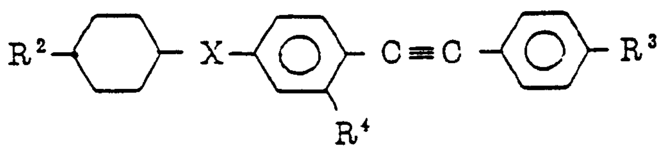

( II ).

wherein $R^2$ represents an alkyl group of 1 to 10 carbon atoms, $R^3$ represents an alkyl group or an alkoxy group each of 1 to 10 carbon atoms, $R^4$ represents H or F and X represents a single bond or $-CH_2CH_2-$.

The blending proportion of the first component is preferably 20 to 70% by weight and that of the second component is preferably 20 to 50% by weight.

Further, the liquid crystal composition in the second aspect of the present invention is characterized by comprising as indispensable components, besides the first and second components, a third component comprising at least one member selected from the group consisting of compounds expressed by the formula

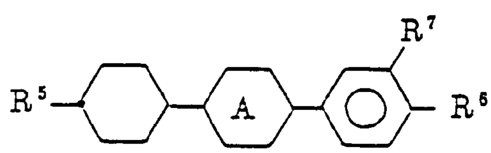

( III )

wherein $R^5$ represents an alkyl group of 1 to 10 carbon atoms, $R^6$ represents F or CN group, $R^7$ represents H or F

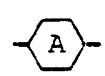

represents

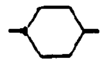 or 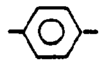,

and compounds expressed by the formula

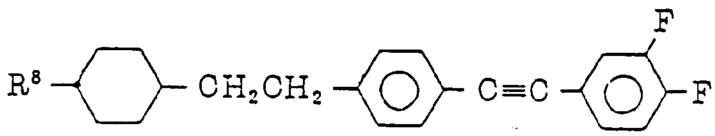 (IV)

wherein $R^8$ represents an alkyl group of 1 to 10 carbon atoms.

The blending proportions of the first component, the second component and the third component are preferably 10 to 60% by weight, 10 to 40% by weight and 10 to 40% by weight, respectively. The compounds of the formula (III) are particularly preferred to be compounds expressed by the formula

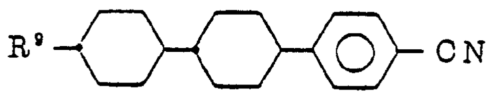

or

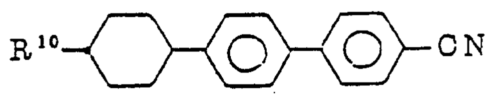

wherein $R^9$ and $R^{10}$ each independently represent an alkyl group of 1 to 10 carbon atoms.

Further, the liquid crystal composition in the third aspect of the present invention is characterized by comprising as indispensable components, besides the first, second and third components, a fourth component comprising at least one member of compounds expressed by the formula

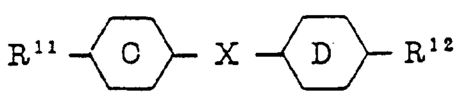 (V)

wherein $R^{11}$ and $R^{12}$ each independently represent an alkyl group, an alkoxy group each of 1 to 10 carbon atoms, or an alkoxymethyl group of 1 to 10 carbon atoms, of 2 to 10 carbon atoms,

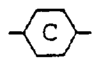 and 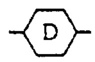

each independently represent

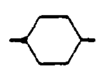 or 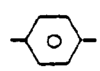

and X represents a single bond, -COO-, $-C\equiv C-$ or $-CH_2CH_2-$.

The blending proportions of the first, second, third and fourth components are preferably 10 to 60% by weight, 10 to 40% by weight, 10 to 40% by weight and 10 to 40% by weight, respectively. The compounds of the formula (V) are particularly preferred to be compounds expressed by the formula

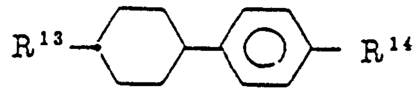

wherein $R^{13}$ represents an alkyl group of 1 to 10 carbon atoms and $R^{14}$ represents an alkoxy group of 1 to 10 carbon atoms.

The liquid crystal display element in the present invention is characterized by using a liquid crystal composition comprising the above-mentioned first and second components. Embodiments of the above liquid crystal display element are that using a liquid crystal composition comprising the above first, second and third components or that using a liquid crystal composition comprising the above first, second, third and fourth components. The respective blending proportions of the components of these liquid crystal compositions are preferred to be the above blending proportions of the liquid crystal compositions of the present invention.

BRIEF DESCRIPTION OF THE DRAWINGS

Fig. 1 shows a crosssectional view illustrating the structure of a liquid crystal cell composed for measuring the voltage-transmittance characteristic with liquid crystals in Examples and Comparative example.

Fig. 2 shows a view illustrating the relationship between the rubbing direction of the cell and the absorption axis of the polarizing plate thereof.

DETAILED DESCRIPTION OF PREFERRED EMBODIMENTS

The liquid crystal composition of the present invention may also contain besides the compounds expressed by the above formulas (I) to (V), other nematic liquid crystals or liquid crystalline compounds in a suitable quantity within a range wherein the object of the present invention is attainable, in order to adjust the threshold voltage, mesomorphic range, viscosity, etc. of the composition.

Preferable, representative examples of such other compounds are as follows:

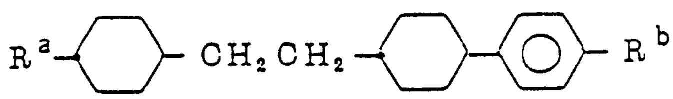

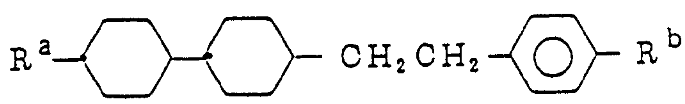

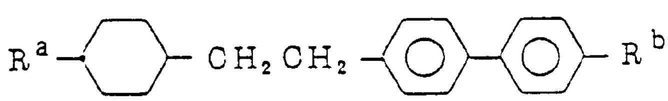

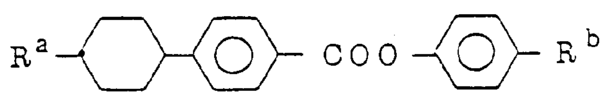

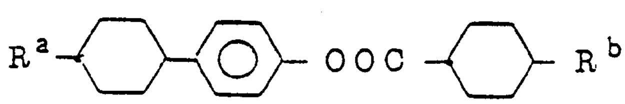

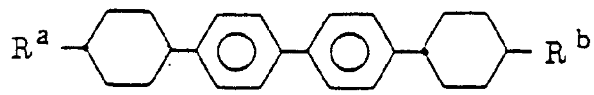

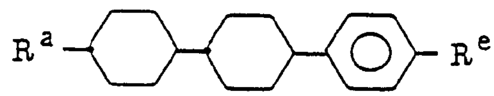

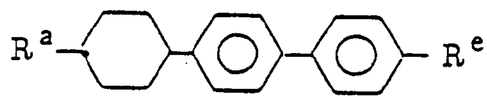

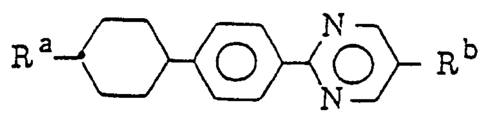

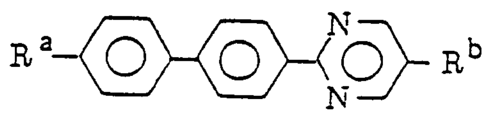

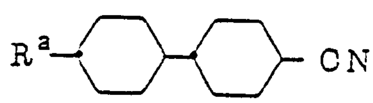

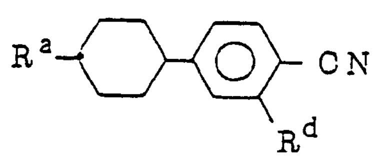

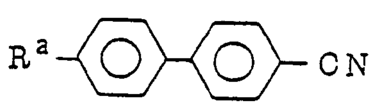

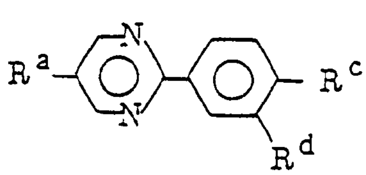

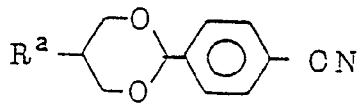

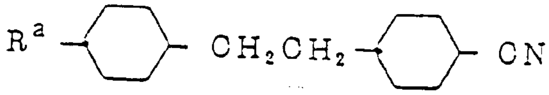

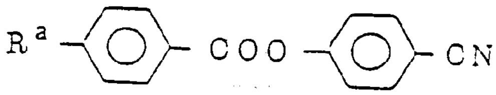

In the above formulas, $R^a$ represents an alkyl group, an alkoxymethyl group or F, $R^b$ represents an alkyl group, an alkoxy group or F, $R^c$ represents an alkyl group, an alkoxy group, F or CN group, $R^d$ represents H or F, and $R^e$ represents an alkyl group or an alkoxy group.

Among compounds expressed by the formula (I), which are disclosed in Japanese patent publication No. Sho 58-27785/1983, those having alkyl chain lengths of 2, 3 and 5 were blended in a ratio of 17:40:43 to obtain a resulting mixture, the physical properties of which are shown in Table 1.

Mp (°C) represents a melting point, NI (°C) represents a nematic-isotropic point, i.e. a clearing point, $\Delta n$ and $\Delta\varepsilon$ represent an optical anisotropy value at 25°C and an dielectric anisotropy value at 25°C, respectively, $K_{33}/K_{11}$ and $K_{33}/K_{22}$ represent elastic constant ratios, respectively, and $\eta$ represents a viscosity at 20°C. The above definitions are also applied in Tables 2 - 4.

Table 1

| | |
|---|---|
| Mp (℃) | −1.0 |
| NI (℃) | 40.8 |
| $\eta$ (cp) | 23.5 |
| $\Delta n$ | 0.113 |
| $\Delta\varepsilon$ | 9.79 |
| $k_{33}/k_{11}$ | 2.22 |
| $k_{33}/k_{22}$ | 2.74 |

As shown in Table 1, the compounds expressed by the formula (I) have a high dielectric anisotropy, but nevertheless have a low viscosity and a low optical anisotropy and also exhibit a broad mesomorphic range with only three components. What is further characteristic is that the elastic constant ratios $K_{33}/K_{11}$ and $K_{33}/K_{22}$ are so large that the compounds can be said to be suitable to SBE mode. In addition, a room temperature liquid crystal 4′-pentyl-4-cyanobiphenyl generally used for TN mode exhibited a $K_{33}/K_{11}$ value of 1.30 and a $K_{33}/K_{22}$ value of 2.39. Further, these values are obtained by approximating the theoretical curve obtained from the continiuum theory to the capacity-voltage curve obtained in the case where an electric field is impressed perpendicularly to the homogeneous or 90° twist-aligned liquid crystal molecule axis.

The content of the compounds expressed by the formula (I) as the first component is suitable to be 20 to 70% by weight in the composition not containing the above third component, and 10 to 60% by weight in the composition containing the same. When the content exceeds 70% by weight or 60% by weight, since the NI point of these compounds is so low that the N-I point of the resulting composition lowers and the change in the color of the above-mentioned cell is liable to occur. On the other hand, if the content is lower than 20% by weight or 10% by weight, the above-mentioned effectiveness is difficult to be expected.

Examples of the compounds expressed by the formula (II) as the second component of the present invention are as follows:

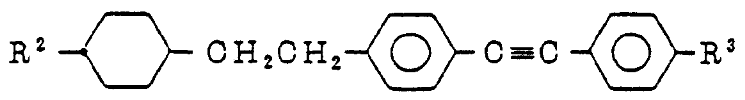

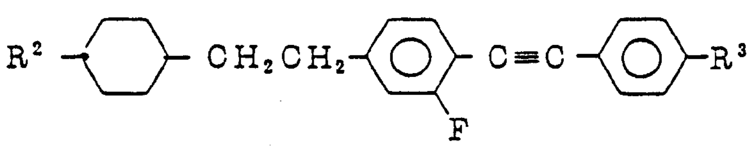

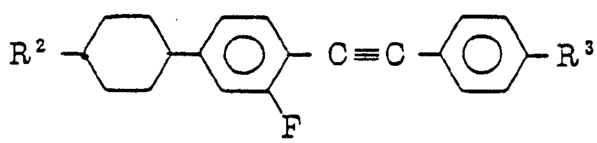

A mixture obtained by dissolving

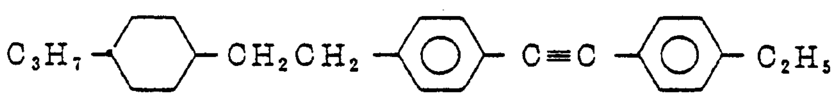

in 15% by weight in commercially available liquid crystals Zℓi-1083 (trademark of cyclohexanebenzonitrile compounds made by Merck Co., Ltd.) is named B1, and mixtures obtained by dissolving

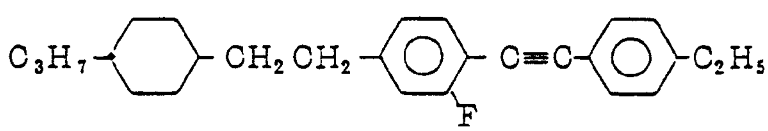

and

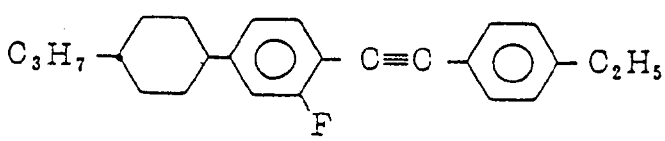

in the same manner as the above are named B2 and B3, respectively. The values of physical properties of these mixtures are shown in Table 2 together with those of Zℓi-1083.

Table 2

| | B 1 | B 2 | B 3 | Zℓi-1083 |
|---|---|---|---|---|
| N I (℃) | 68 | 65.1 | 66.9 | 52.3 |
| η (cp) | 21.1 | 21.2 | 22.2 | 21.7 |
| Δ n | 0.141 | 0.136 | 0.139 | 0.119 |
| Δ ε | 9.8 | 9.9 | 10.1 | 10.7 |

As partly evident from Table 2, compounds expressed by the formula (II) exhibit physical property values common thereto in that they have a negative dielectric anisotropy value, a large optical anisotropy value, a low viscosity for compounds having three rings and a high clearing point distributed over about 150°C to 190°C. The content of these compounds in the present invention is 20 to 50% by weight in the composition not containing the above third component, and 10 to 40% by weight in the composition containing the same. As described above, since they have a high clearing point, if it exceeds 50% by weight or 40% by weight, in the above compositions,there is a fear that the lower limit temperature of the nematic phase rises to narrow the range of the operation temperature, while if it is less than 20% by weight or 10% by weight, the clearing point of the resulting composition is insufficient, so the above-mentioned color of the cell often changes.

Examples of the compounds expressed by the formula (III) or (IV) as the third component are as follows:

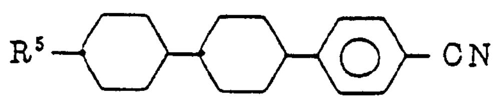

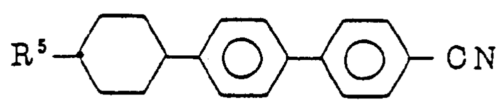

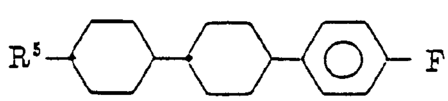

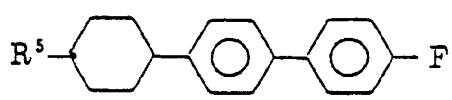

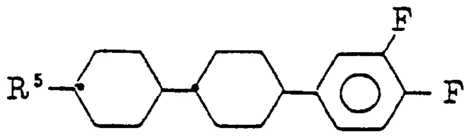

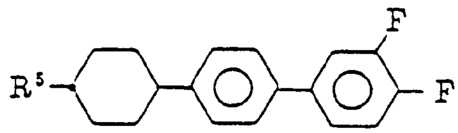

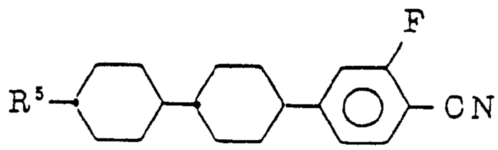

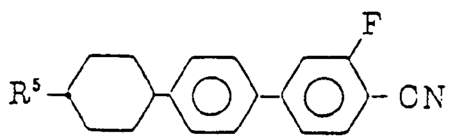

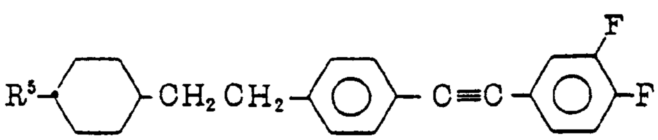

Mixtures obtained by dissolving each of the following compounds in 15% by weight in Zℓi-1083 (trademark) were named C1, C2, C3, C4, C5, C6, C7 and C8:

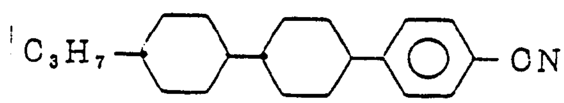

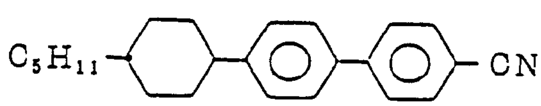

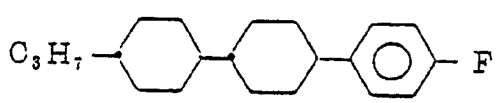

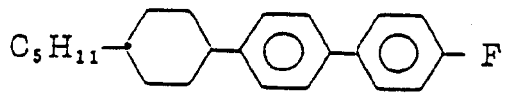

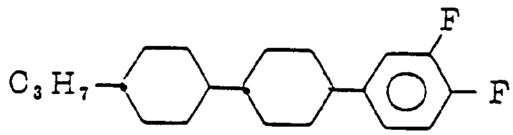

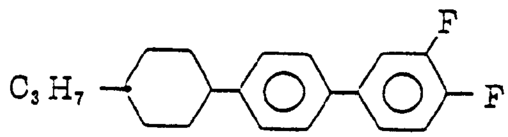

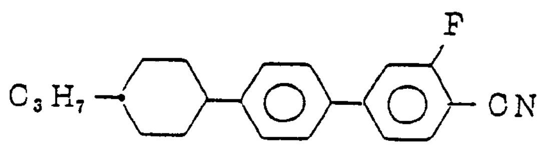

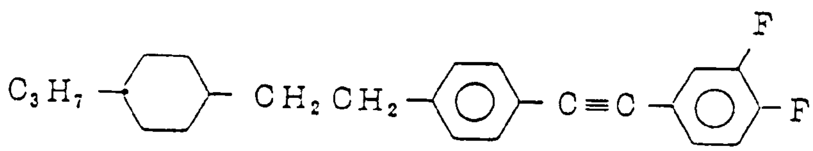

The values of physical properties of these mixtures are shown in Table 3.

Table 3

| | NI (°C) | $\eta$ (cp) | $\Delta n$ | $\Delta\varepsilon$ |
|---|---|---|---|---|
| C1 | 75.6 | 26.6 | 0.132 | 10.9 |
| C2 | 72.2 | 25.4 | 0.139 | 11.0 |
| C3 | 63.1 | 20.3 | 0.115 | 10.0 |
| C4 | 61.0 | 23.9 | 0.122 | 11.0 |
| C5 | 59.0 | 21.2 | 0.118 | 10.4 |
| C6 | 53.3 | 24.4 | 0.120 | 10.4 |
| C7 | 69.3 | 26.7 | 0.126 | 13.0 |
| C8 | 61.1 | 24.1 | 0.132 | 10.4 |

As partly evident from Table 3, the compounds expressed by the formula (III) or (IV) exhibit physical property values common thereto in that they have a positive dielectric anisotropy, a relatively low viscosity for compounds having three rings, a high clearing point, etc.

The content of these compounds in the present invention is preferable to be 10 to 40% by weight. Most of these compounds exhibit a clearing point distributed over about 100°C to 250°C. If the content exceeds 40% by weight, depending on the combination of the compounds of the formula (I) with those of the formula (II), there is a fear that the lower limit temperature of the nematic phase of the resulting composition rises, to narrow the range of the operation temperature, while if it is less than 10% by weight, the clearing point of the resulting composition is to be insufficient, so the color of the cell often changes.

Examples of the compounds expressed by the formula (V) of the present invention are as follows

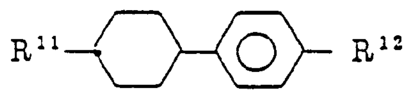

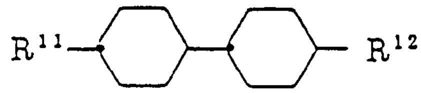

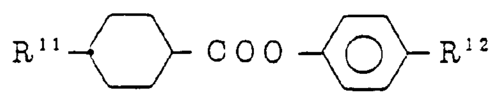

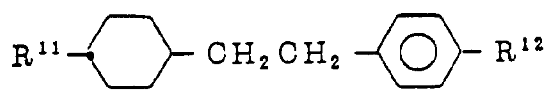

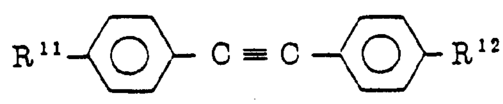 .

Mixtures obtained by dissolving each of the following compounds in 15% by weight in commercially available liquid crystals of cyclohexanebenzonitrile compounds Zℓi-1132 (trademark) made by Merck Co., Ltd. were named D1, D2, D3, D4 and D5, respectively:

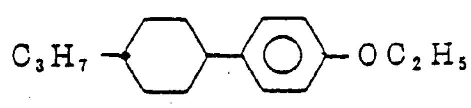

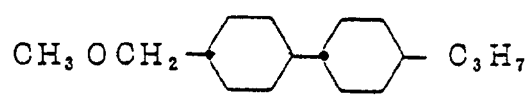

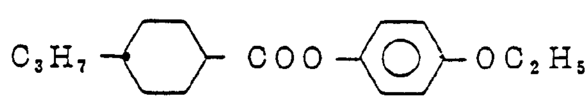

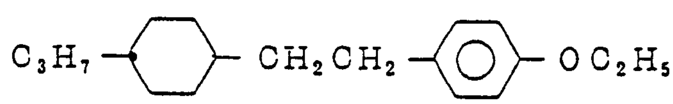

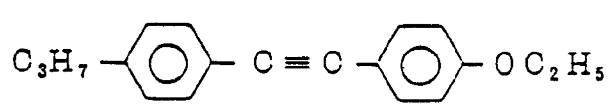 .

The values of physical properties of these mixtures are shown in Table 4 together with those of Zℓi-1132.

Table 4

| | D1 | D2 | D3 | D4 | D5 | 1132 |
|---|---|---|---|---|---|---|
| NI (℃) | 64.1 | 67.3 | 70.2 | 65.1 | 70.8 | 72.4 |
| $\eta$ (cp) | 21.7 | 20.6 | 26.6 | 22.1 | 22.8 | 27.0 |
| $\Delta n$ | 0.124 | 0.115 | 0.125 | 0.124 | 0.157 | 0.137 |
| $\Delta \varepsilon$ | 10.0 | 9.7 | 9.4 | 9.7 | 9.9 | 11.0 |

As partly evident from Table 4, the compounds expressed by the formula (V) exhibit physical property values common thereto in that they have a negative dielectric anisotropy, a low viscosity and a relatively low clearing point.

The content of these compounds in the present invention is preferable to be 10 to 40% by weight. Most of these compounds exhibit a clearing point distributed over about 30°C to 90°C, if the content exceeds 40% by weight, depending on the combination of compounds of the formulas (I), (II) and (III) or (IV), there is a fear that the clearing point of the resulting composition lowers, so the above-mentioned color of the cell changes, while if it is less than 10% by weight, the viscosity of the resulting composition rises to make the response time often longer.

Example

The present invention will be described in more detail by way of Examples, but it should not be construed to be limited thereto. In addition, the steepness of the voltage-transmittance characteristic curve referred to herein is defined as follows:

When the voltages in the case where the light transmittances in the light axis direction perpendicular to the display plane are 10% and 80% are denoted by $V_{10}$ and $V_{80}$, respectively, then the resulting steepness are defined by the following equation:

$$\alpha = V_{80}/V_{10} \quad (1)$$

Herein, $V_{10}$ refers to a threshold voltage.

Thus, this means that the closer to 1 the parameter $\alpha$, the steeper the voltage-brightness characteristic. A parameter Nmax expressing the number of multiplex is defined by the following equation using the above $\alpha$:

$$\mathrm{Nmax} = \left(\frac{\alpha^2 + 1}{\alpha^2 - 1}\right)^2 \quad (2)$$

This indicates that the larger the Nmax, the higher the resulting multiplex. The proportions of the components in Examples and Comparative example mentioned below are all by percent by weight.

Example 1

A liquid crystal composition consisting of the following three compounds as the first component was prepared:

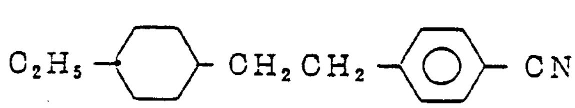

15wt%

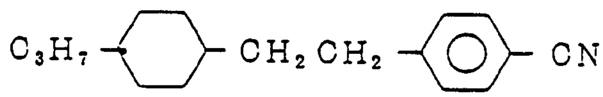

15 wt%

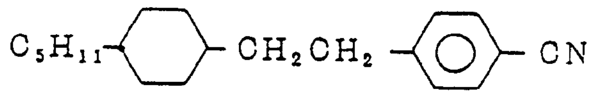

15 wt% ,

the following six compounds as the second component:

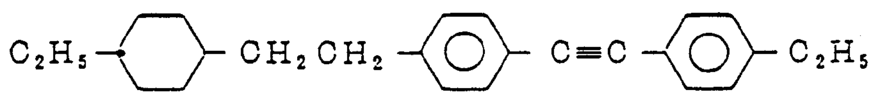

5 wt%

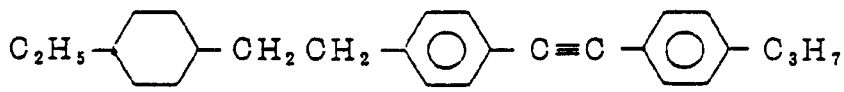

5 wt%

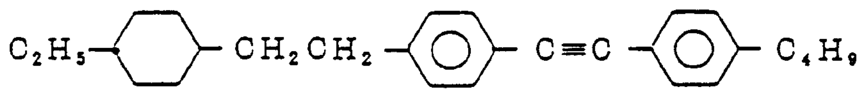

10 wt%

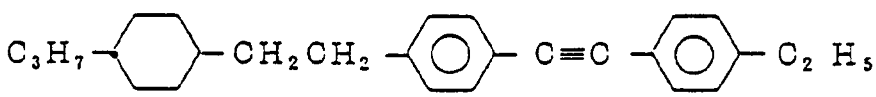

5 wt%

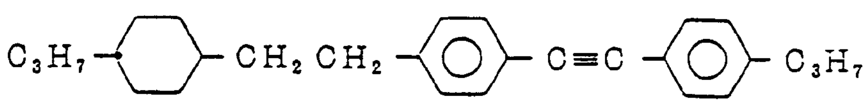

5 wt%

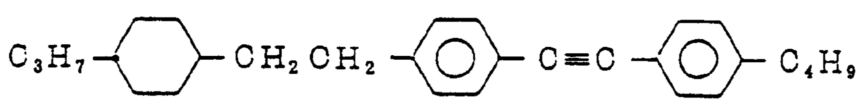

5 wt%

and the following two compounds as the third component:

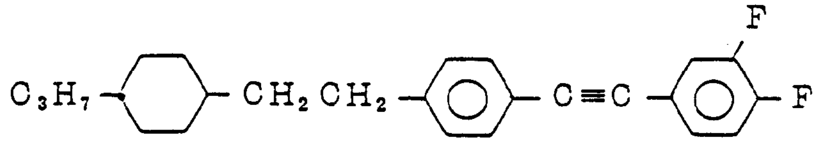

10wt%

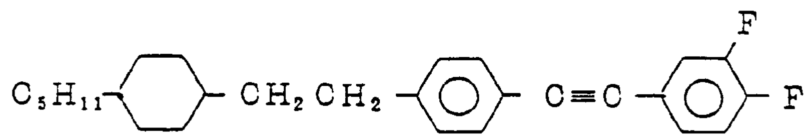

10wt%

and the characteristics of the liquid crystal composition were measured. The results are shown in Table 5.

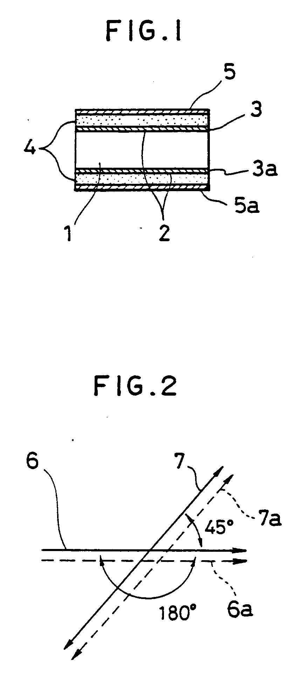

A liquid crystal 1 obtained by adding a chiral substance (S-811 made by Merck Co., Ltd.) to the above liquid crystal composition was sealed in a cell of a twist angle of 180° provided with plane transparent electrodes 2 having rubbed upper side and lower side aligned membranes (PSI-871-PPP, trademark, made by Chisso Corporation) of a polyimide compound, 3 and 3a, respectively, under conditions of a $\Delta n \cdot d$ of 800 nm and a d/P of 0.42 without any occurrence of stripe domain and a low order twist, followed by applying thereon upper side and lower side polarization plates 5 and 5a to measure the voltage-transmittance characteristic. Fig. 2 shows the relationship between the rubbing direction of the above cell and the absorption axis of the polarization plates thereof. In this figure, 6 and 6a show the rubbing direction of the upper side aligned membrane and that of the lower side aligned membrane, respectively, while 7 and 7a show the absorption axis of the upper side polarization and that of the lower side polarization plate, respectively. In addition, the above-mentioned aligned membranes have a pretilt angle of 3.5° in the above-mentioned Zℓi-1132 (trademark). The pretilt angle was measured according to the crystal rotation system (T.J. Scheffer and J. Nehring; J. of Applied Physics, Vol. 48, No. 5, May, 1977).

The above-mentioned P refers to the helical pitch intrinsic of chiral nematic liquid crystals, and d refers to the cell thickness i.e. the distance between two electrodes.

The threshold voltage at 25°C was 1.860 V, the parameter $\alpha$ expressing the steepness was 1.099 and the parameter Nmax expressing the number of multiplex was 113.

## Example 2

There was prepared a liquid crystal composition consisting of the following three compounds as the first component:

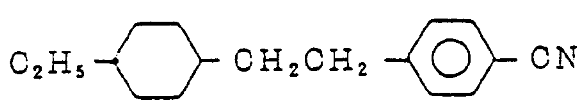

25wt%

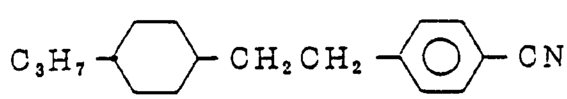

15wt%

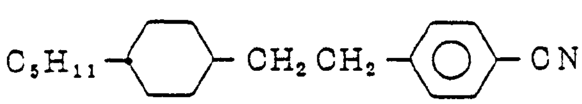

15wt% ,

the following compound as the second component;

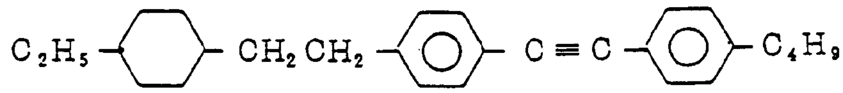

10wt% ,

and the following four compounds as the third component;

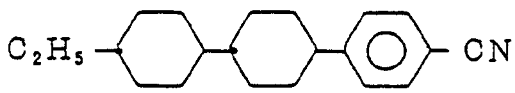

5wt%

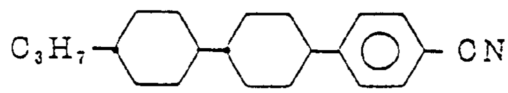

5wt%

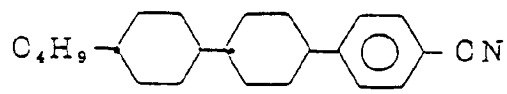

5wt%

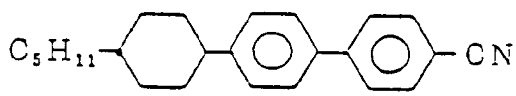

20wt% .

Its characteristics were measured in the same manner as in Example 1. The results are shown in Table 5.

Example 3

There was prepared a liquid crystal composition consisting of the following three compounds as the first component:

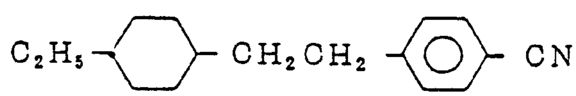

10wt%

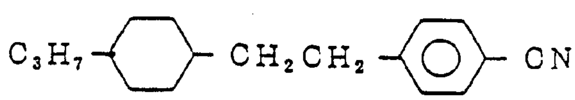

10wt%

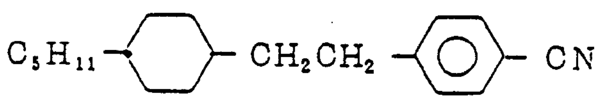

10wt% ,

the following three compounds as the second component:

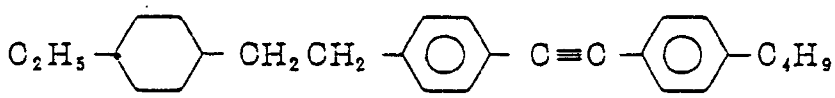

10 wt%

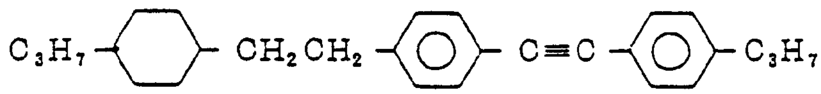

5 wt%

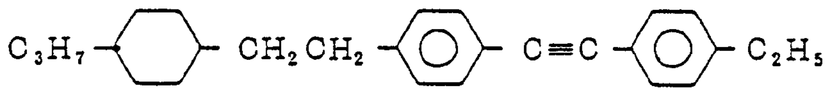

5 wt% ,

the following four compounds as the third component:

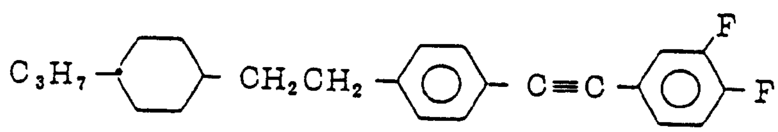

10 wt%

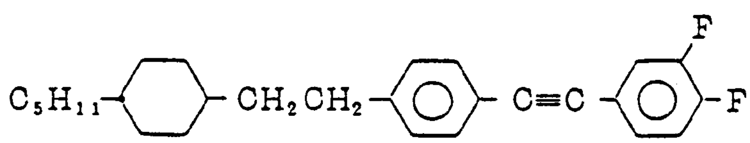

10 wt%

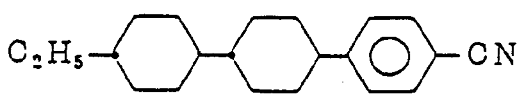

5 wt%

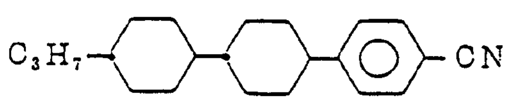

5 wt% ,

and the following two compounds as other compounds than those of the first to the fourth components:

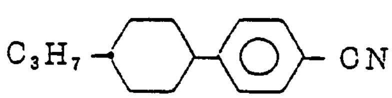

10 wt%

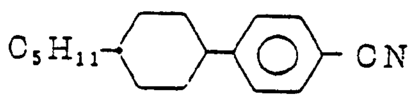

10wt%

and its characteristics were measured in the same manner as in Example 1. The results are shown in Table 5.

Example 4

There was prepared a liquid crystal composition consisting of the following compound as the first component:

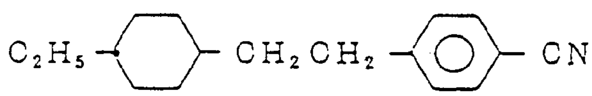

10wt% ,

the following five compounds as the second component:

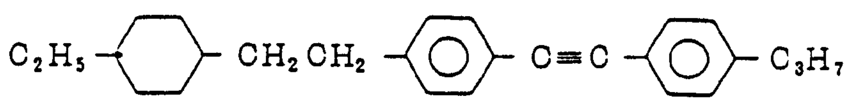

5wt%

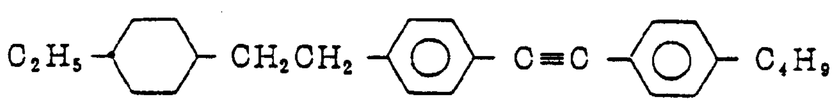

10wt%

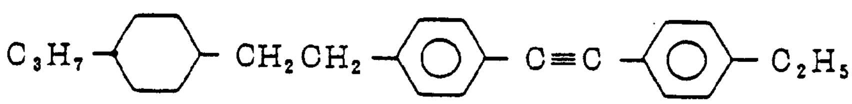

5wt%

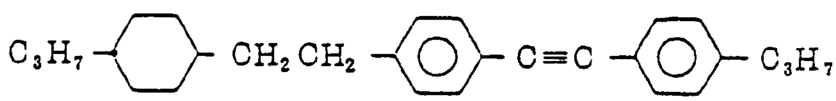

5wt%

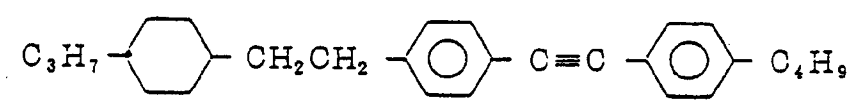

5wt% ,

the following five compounds as the third component:

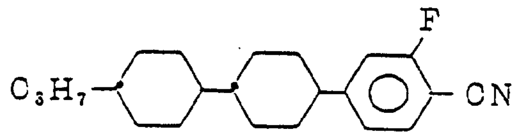 10 wt%

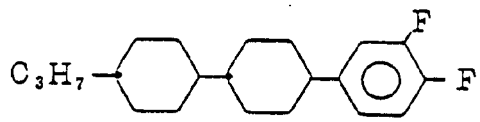 10 wt%

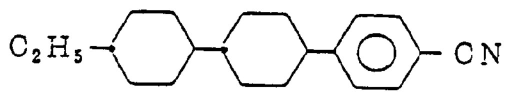 5 wt%

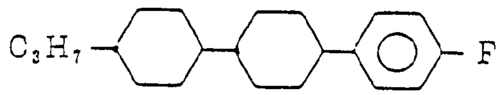 5 wt%

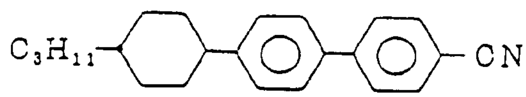 10 wt%

and the following two compounds as other compounds than those of the first to the fourth components:

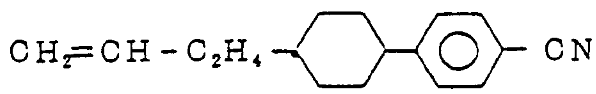 10 wt%

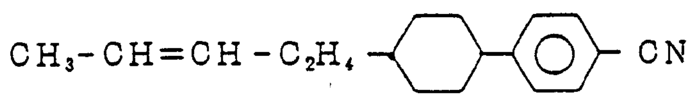 10 wt%

and its characteristics were measured in the same manner as in Example 1. The results are shown in Table 5.

Example 5

There was prepared a liquid crystal composition consisting of the following three compounds as the first component:

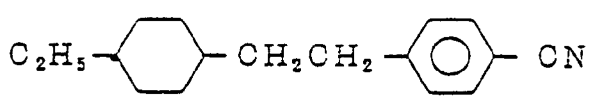 15 wt%

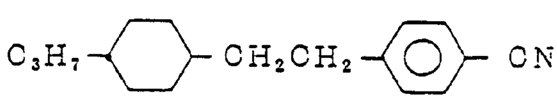 15 wt%

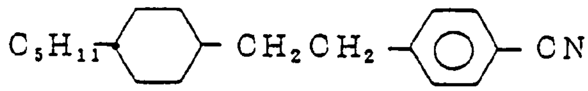

10wt% ,

the following three compounds as the second component:

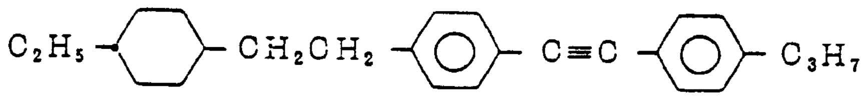

5wt%

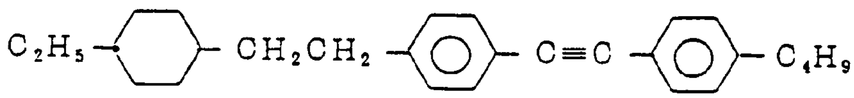

10wt%

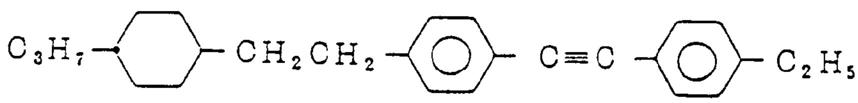 ,

5wt%

the following three compounds as the third component:

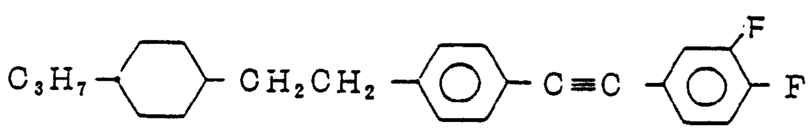

10wt%

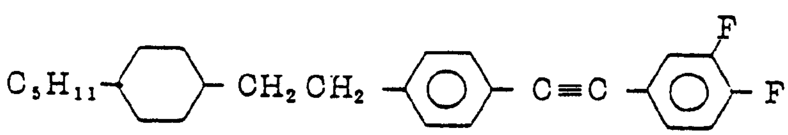

10wt%

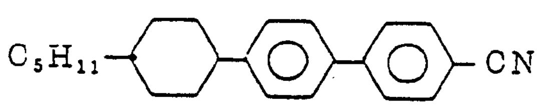

10wt%

and the following compound as the fourth component:

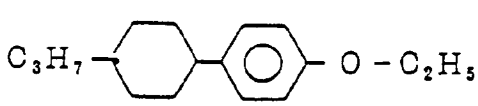

10wt%

and its characteristics were measured in the same manner as in Example 1. The results are shown in Table 5.

Example 6

There was prepared a liquid crystal composition consisting of the following compound as the first component:

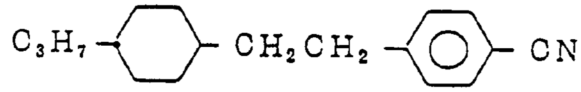

10 wt% ,

the following three compounds as the second component:

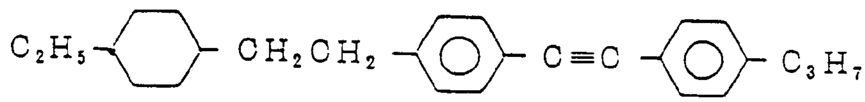

5 wt%

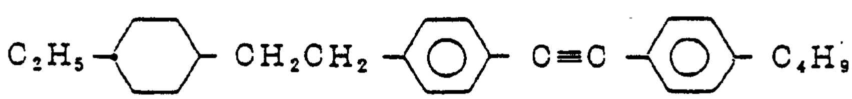

10 wt%

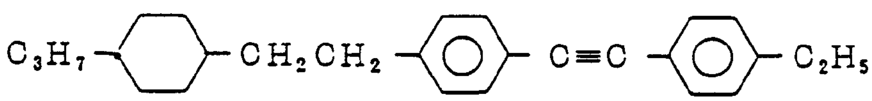

5 wt% ,

the following four compounds as the third component:

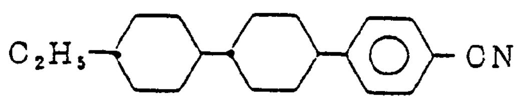

5 wt%

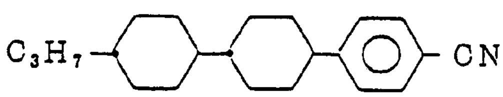

5 wt%

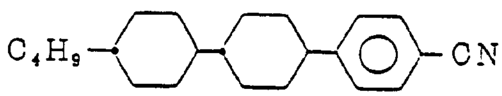

5 wt%

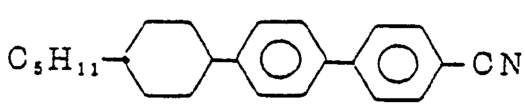

15 wt%

and the following three compounds as the fourth component:

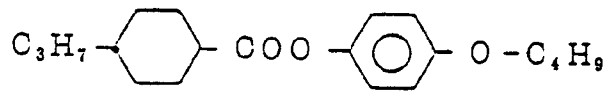 10wt%

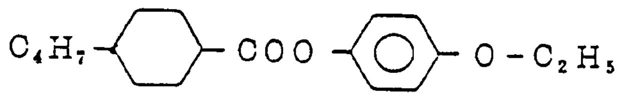 10wt%

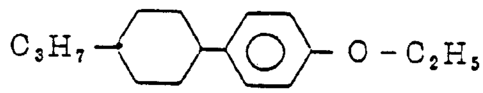 20wt%

and its characteristics were measured in the same manner as in Example 1. The results are shown in Table 5.

Example 7

There was prepared a liquid crystal composition consisting of the following two compounds as the first component:

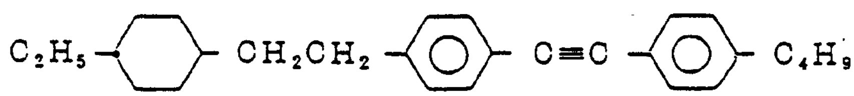

10wt%

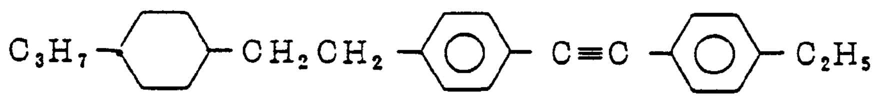

5wt% ,

the following compound as the second component:

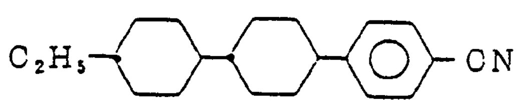 5wt%

the following six compounds as the third component:

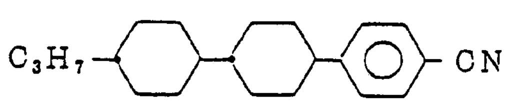 5wt%

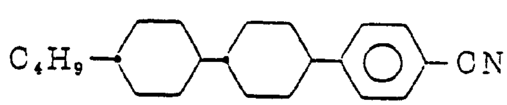 5wt%

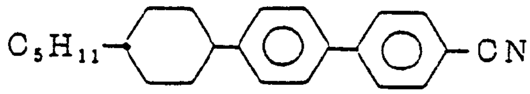

15wt%

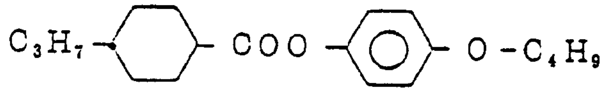

10wt%

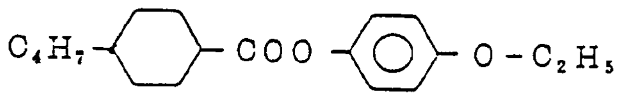

10wt%

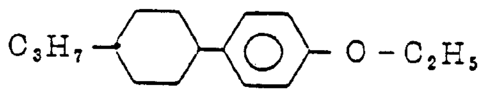

20wt%

and the following two compounds as the fourth component:

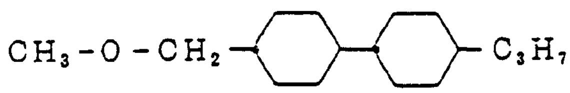

10wt%

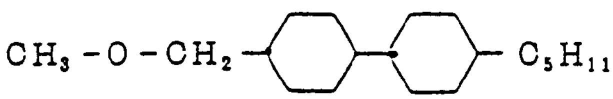

5wt%

and its characteristics were measured in the same manner as in Example 1. The results are shown in Table 5.

Example 8

There was prepared a liquid crystal composition consisting of the following compound as the first component:

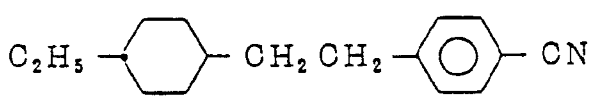

15wt%,

the following two compounds as the second component:

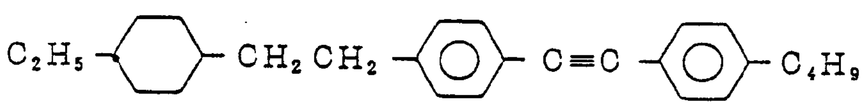

10wt%

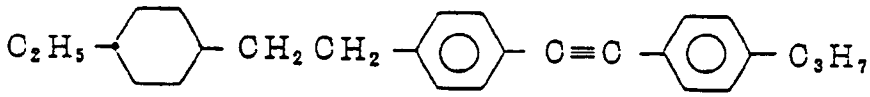

5 wt% ,

the following six compounds as the third component:

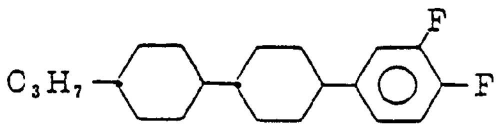

10 wt%

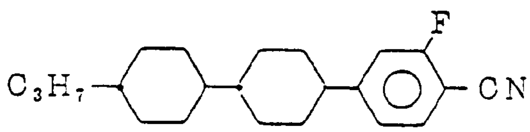

10 wt%

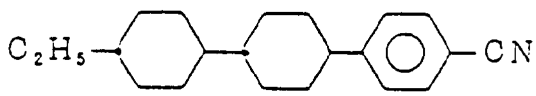

5 wt%

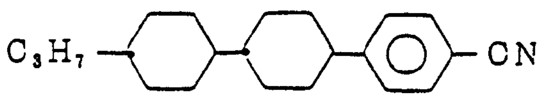

5 wt%

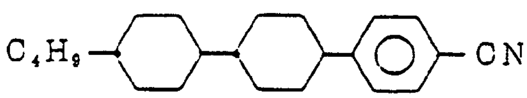

5 wt%

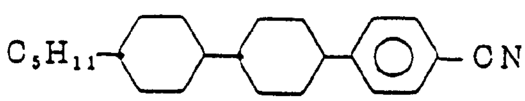

5 wt% ,

the following three compounds as the fourth component:

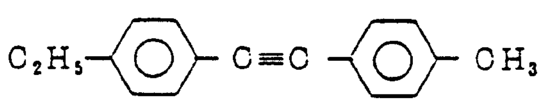

5 wt%

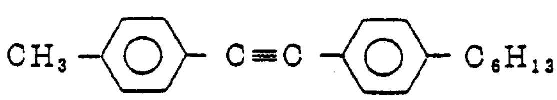

5 wt%

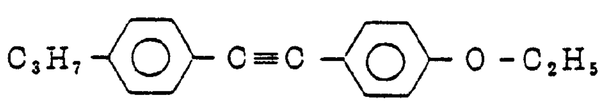

10 wt%

and the following compound as another compound than those of the first to fourth components:

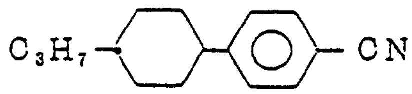 10wt%

and its characteristics were measured in the same manner as in Example 1. The results are shown in Table 5.

Comparative example 1

For comparison, there was prepared a liquid crystal composition consisting of the following known eight compounds generally used:

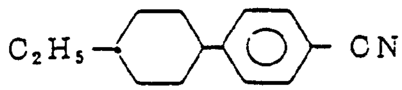 15wt%

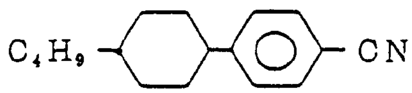 10wt%

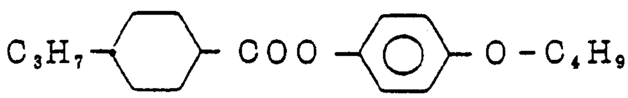 18wt%

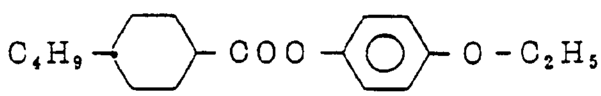 12wt%

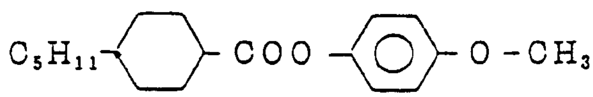 12wt%

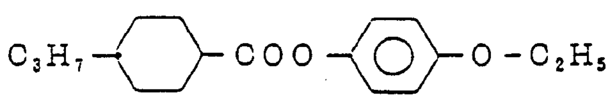 10wt%

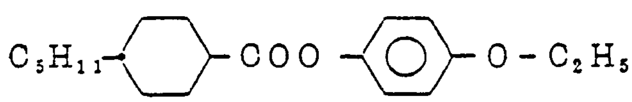 8wt%

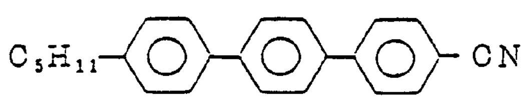 15wt%

and its characteristics were measured in the same manner as in Example 1. The results are shown in Table 5.

Example 9

There was prepared a liquid crystal composition consisting of the following two compounds as the first component:

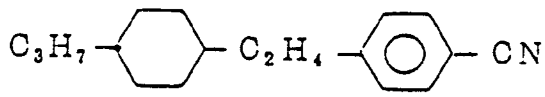 30 wt%

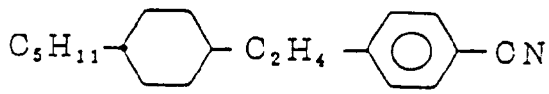 30 wt%

and the following five compounds as the second component

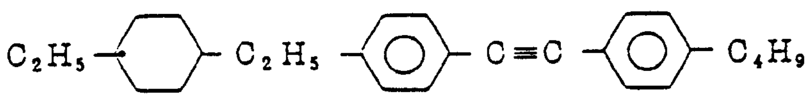

10 wt%

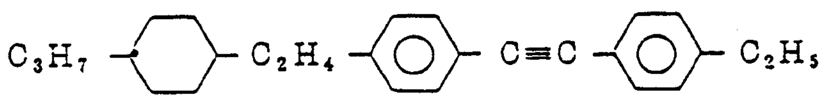

5 wt%

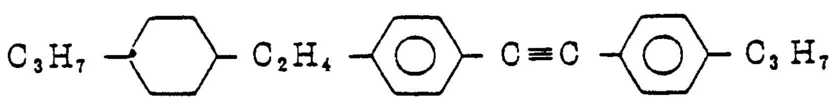

5 wt%

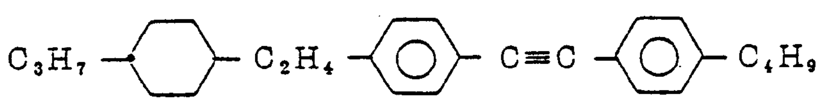

5 wt%

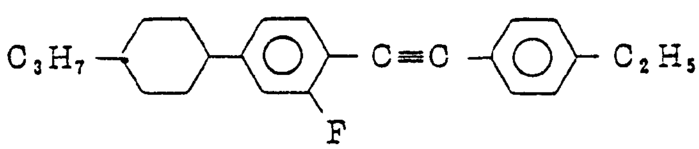 15 wt%

and its characteristics were measured in the same manner as in Example 1. The results are shown in Table 5.

Example 10

There was prepared a liquid crystal composition consisting of the following two compounds as the first

component:

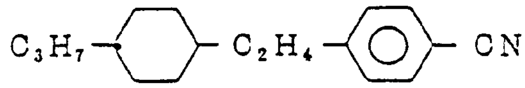 30wt%

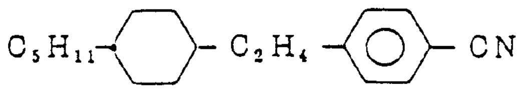 30wt% ,

the following two compounds as the second component:

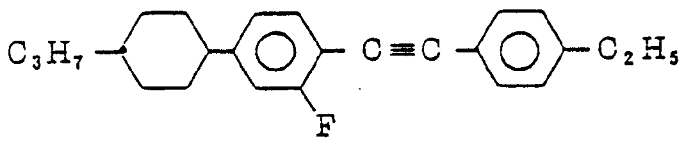 10wt%

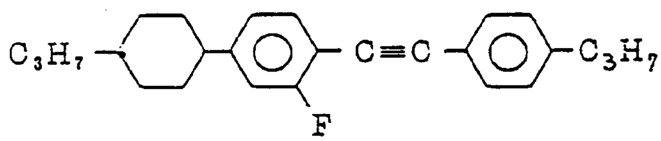 10wt%

and the following two compounds as other compounds than those of the first to the fourth components:

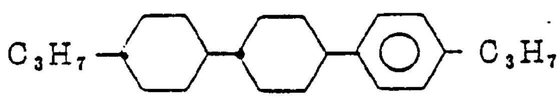 10wt%

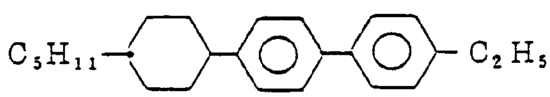 10wt%

and its characteristics were measured in the same manner as in Example 1. The results are shown in Table 5.

Example 11

There was prepared a liquid crystal composition consisting of the following two compounds as the first component:

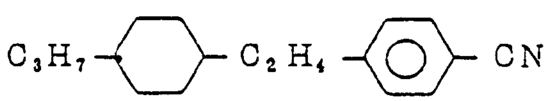 15wt%

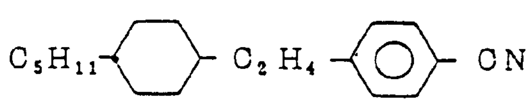 15wt% ,

the following seven compounds as the second component:

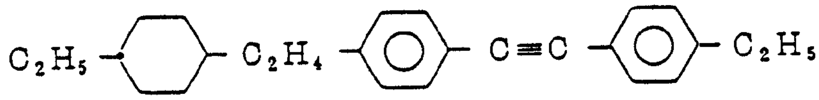

5 wt%

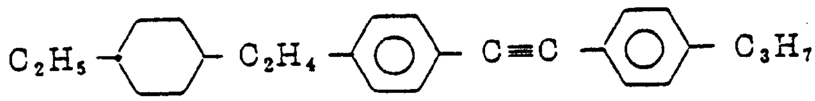

5 wt%

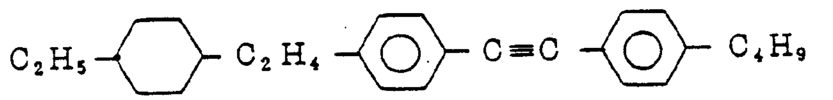

10 wt%

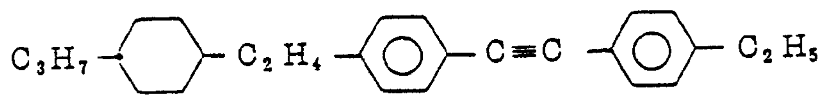

5 wt%

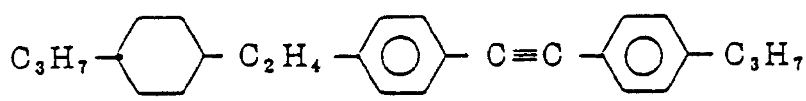

5 wt%

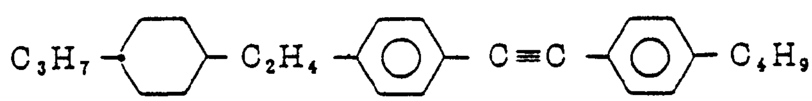

5 wt%

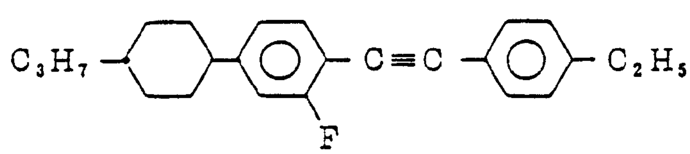

15 wt%

and the following two compounds as other compounds than those of the first to the fourth components:

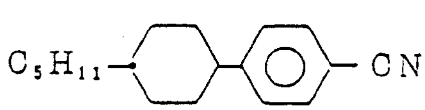

10 wt%

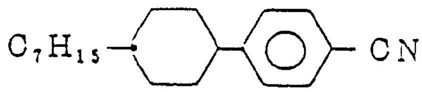

10 wt%

and its characteristics were measured in the same manner as in Example 1. The results are shown in Table 5.

Example 12

There was prepared a liquid crystal composition consisting of the following two compounds as the second component:

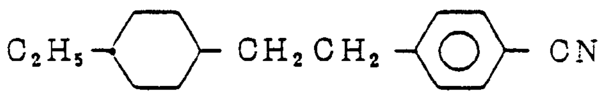

10 wt%

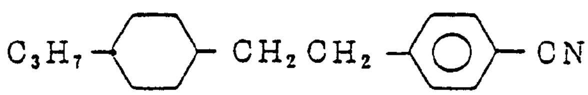

10 wt% ,

the following compound as the second component:

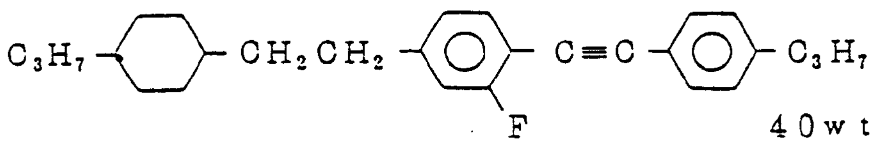

40 wt% ,

the following three compounds as the third component:

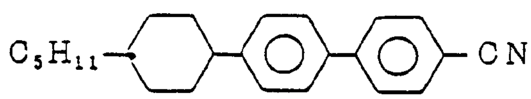

10 wt%

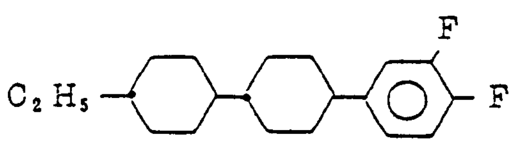

5 wt%

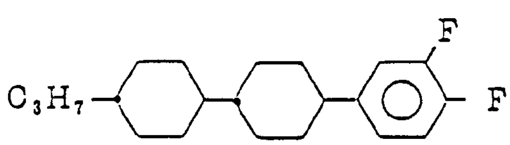

5 wt% ,

the following compound as the fourth component:

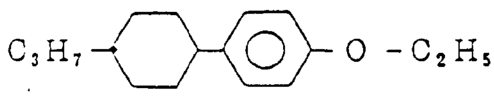 10 wt%

and the following compound as another compound than those of the first to the fourth component:

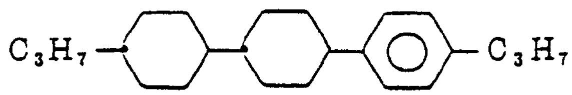 10 wt%

and its characteristics were measured in the same manner as in Example 1. The results are shown in Table 5.

Example 13

There was prepared a liquid crystal composition consisting of the following three compounds as the first component:

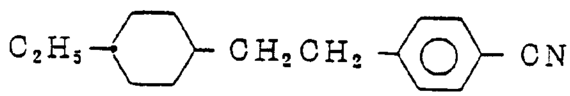 12 wt%

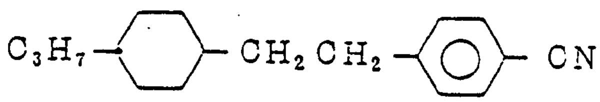 24 wt%

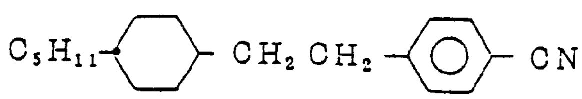 24 wt%

and the forllowing three compounds as the second component:

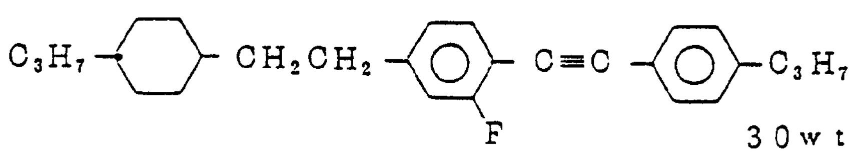

30 wt%

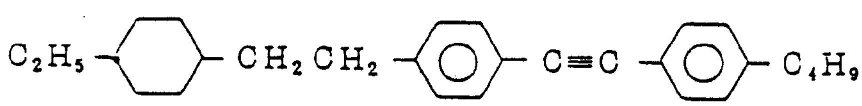

5 wt%

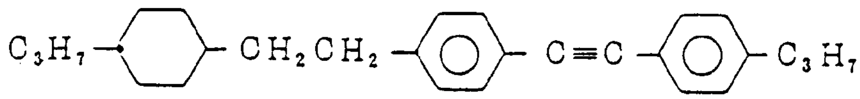

5 wt%

and its characteristics were measured in the same manner as in Example 1. The results are shown in Table 5.

Example 14

There was prepared a liquid crystal composition consisting of the following three compounds as the first component:

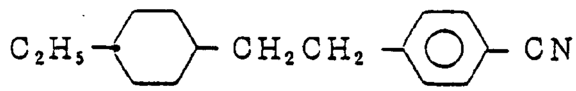

5 wt%

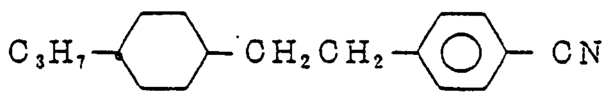

5 wt%

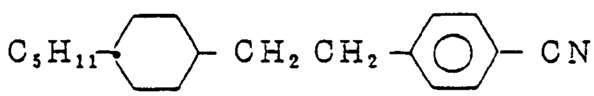

5 wt% ,

the following four compounds as the second component:

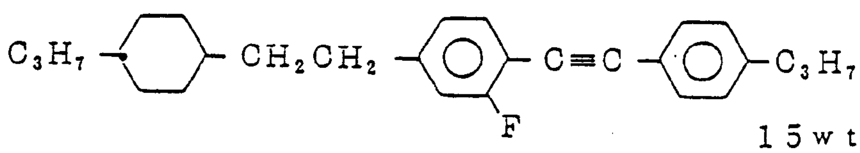

15 wt%

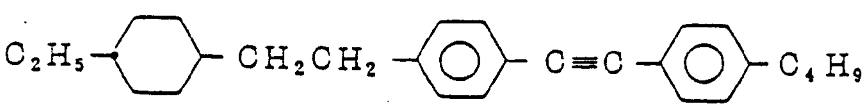

5 wt%

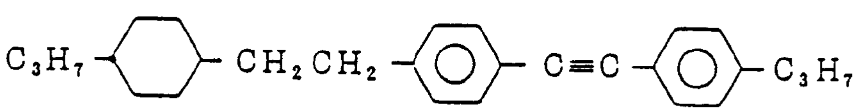

5 wt%

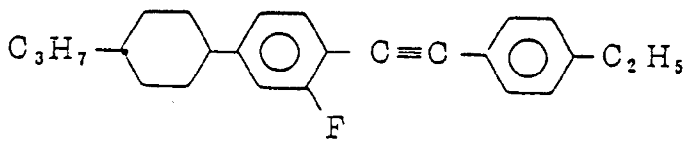

10wt%

and the following five compounds as the third component:

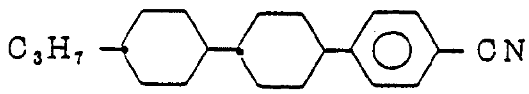

15wt%

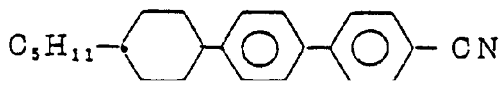

10wt%

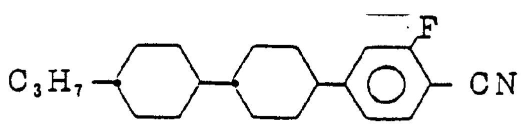

5wt%

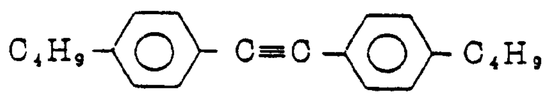

10wt%

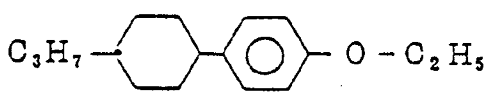

10wt%

and its characteristics were measured in the same manner as in Example 1. The results are shown in Table 5.

Table 5

| | Example | | | | | | | | | | | | | | Comp. ex. |
|---|---|---|---|---|---|---|---|---|---|---|---|---|---|---|---|
| | 1 | 2 | 3 | 4 | 5 | 6 | 7 | 8 | 9 | 10 | 11 | 12 | 13 | 14 | 1 |
| Clearing point (℃) | 86.4 | 94.3 | 90.4 | 126.6 | 84.1 | 116.2 | 96.8 | 105.8 | 83.8 | 85.1 | 99.6 | 115.2 | 102.2 | 124.9 | 81.2 |
| Optical anisotropy | 0.163 | 0.150 | 0.164 | 0.150 | 0.163 | 0.148 | 0.131 | 0.167 | 0.162 | 0.145 | 0.176 | 0.170 | 0.165 | 0.184 | 0.155 |
| Viscosity (cp) | 29.8 | 39.0 | 26.4 | 33.7 | 25.9 | 28.8 | 28.2 | 27.6 | 29.9 | 29.6 | 30.6 | 23.2 | 21.4 | 30.9 | 43.8 |
| $V_{10}$ (25℃) (V) | 1.86 | 1.70 | 1.68 | 1.91 | 1.81 | 2.20 | 1.81 | 1.74 | 1.86 | 1.93 | 2.03 | 2.44 | 1.88 | 2.15 | 1.60 |
| $\alpha$ (25℃) (V) | 1.099 | 1.088 | 1.102 | 1.076 | 1.097 | 1.106 | 1.098 | 1.104 | 1.097 | 1.099 | 1.102 | 1.098 | 1.102 | 1.091 | 1.125 |
| $N_{max}$ (25℃) | 113 | 141 | 107 | 187 | 117 | 99 | 115 | 103 | 117 | 113 | 107 | 115 | 107 | 132 | 73 |
| $k_{33}/k_{11}$ | 1.46 | 2.10 | 1.93 | 2.02 | 1.54 | 1.46 | 2.02 | 1.48 | 1.62 | 1.64 | 1.50 | 1.68 | 1.67 | 2.00 | 1.10 |

The effectiveness brought about by the present invention consists in that the steepness in the voltage-transmittance characteristic curve has been improved retaining various characteristics required for SBE mode in a well-balanced manner, particularly a high clearing point, a low viscosity and a controllable $\Delta n$.

The value of the steepness $\alpha$ defined in the formula (I) is preferred to be closer to 1 in the case of liquid crystal elements of multiplex drive mode, and in the present invention, a less $\alpha$ value is achieved. This is because the compounds of the formulas (I) and (II), further, mixtures obtained by adding the compounds of the formulas (III) or (IV) as the third component to the above compounds, and still further, mixtures obtained by further adding the compounds of the formula (V) as the fourth component to the above compounds contribute thereto. This is indicated by comparison of the above Examples with the above Comparative example. By means of the compounds of the formulas (I) and (II), and further the compounds of formula (III) as the third component, and still further the compounds of the formula (V) added to the above compounds in suitable proportions,not only the $\alpha$ but also the viscosity have been improved.

Since the liquid crystal composition of the present invention has the above-mentioned characteristics, when it is used for a liquid crystal device, a multiplex drive of $^1/_{100}$ duty or more according to SBE mode is possible. Further, the high clearing point and the low viscosity, of course, also makes possible its use in the 90° twist TN mode wherein the problem of the steepness is not particularly raised.

## Claims

1. A liquid crystal composition for a supertwisted birefringence effect display comprising as indispensable components, a first component comprising at least one member of compounds expressed by the formula

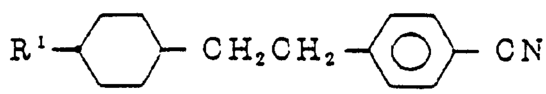

(I)

wherein $R^1$ represents an alkyl group of 1 to 10 carbon atoms, and a second component comprising at least one member of compounds expressed by the formula

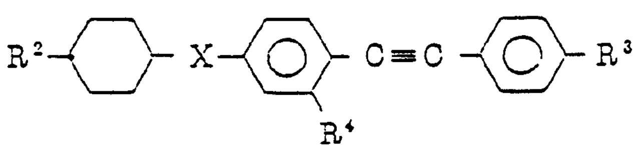

(II)

wherein $R^2$ represents an alkyl group of 1 to 10 carbon atoms, $R^3$ represents an alkyl group or an alkoxy group each of 1 to 10 carbon atoms, $R^4$ represents H or F and X represents a single bond or $-CH_2CH_2-$.

2. A liquid crystal composition according to claim 1, wherein the blending proportion of the first component is 20 to 70% by weight and that of the second component is 20 to 50% by weight.

3. A liquid crystal composition for a supertwisted birefringence effect display comprising as indispensable components, the first and second components as set forth in claim 1 and further a third component comprising at least one member selected from the group consisting of compounds expressed by the formula

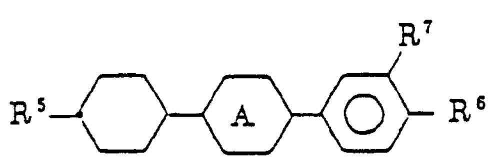

(III)

wherein $R^5$ represents an alkyl group of 1 to 10 carbon atoms, $R^6$ represents F or CN group, $R^7$ represents H or F,

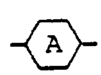

represents

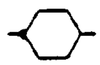 or 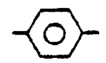,

and compounds expressed by the formula

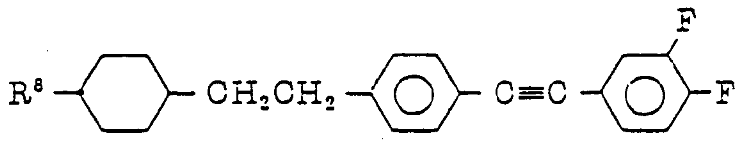 (IV)

wherein $R^8$ represents an alkyl group of 1 to 10 carbon atoms.

**4.** A liquid crystal composition according to claim 3, wherein the blending proportions of the first component, the second component and the third component are 10 to 60% by weight, 10 to 40% by weight and 10 to 40% by weight, respectively.

**5.** A liquid crystal composition according to claim 3 or claim 4, wherein the compounds of the formula (III) are those expressed by the formula

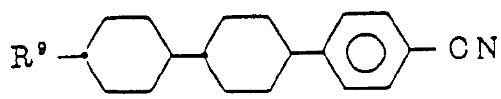

or

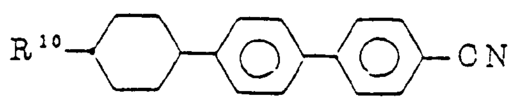

wherein $R^9$ and $R^{10}$ each independently represent an alkyl group of 1 to 10 carbon atoms.

**6.** A liquid crystal composition for a supertwisted birefringence effect display comprising as indispensable components, the first, second and third components as set forth in claim 3 and further a fourth component comprising at least one member of compounds expressed by the formula

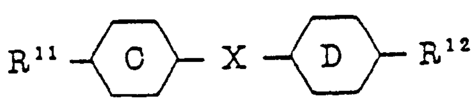 (V)

wherein $R^{11}$ and $R^{12}$ each independently represent an alkyl group, an alkoxy group or an alkoxymethyl group each of 1 to 10 carbon atoms,

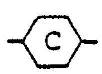 and 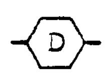

each independently represent

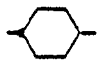 or 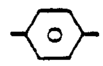

and X represents a single bond, -COO-, -C≡C- or $-CH_2CH_2-$.

7. A liquid crystal composition according to claim 6, wherein the blending proportions of the first, second, third and fourth components are 10 to 60% by weight, to 40% by weight, 10 to 40% by weight and 10 to 40% by weight, respectively.

8. A liquid crystal composition according to claim 6 or claim 7, wherein the forth component is at least one member of compounds expressed by the formula

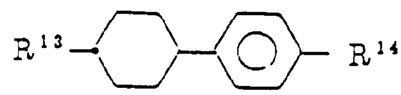

wherein $R^{13}$ represents an alkyl group of 1 to 10 carbon atoms and $R^{14}$ represents an alkoxy group of 1 to 10 carbon atoms.

9. A liquid crystal display element using the liquid crystal composition as set forth in either one of claims 1 to 8.

## Patentansprüche

1. Flüssigkristall-Zusammensetzung für eine superverdrillte Doppelbrechungseffekt-Anzeige, die als unabdingbare Komponenten eine erste Komponente umfaßt, die mindestens eine der durch die Formel

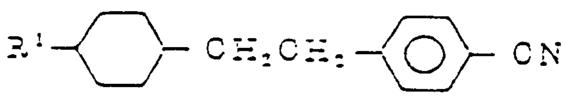 (I)

dargestellten Verbindungen umfaßt, worin $R^1$ eine Alkylgruppe mit 1 bis 10 Kohlenstoffatomen bedeutet, und eine zweite Komponente, die mindestens eine der durch die Formel

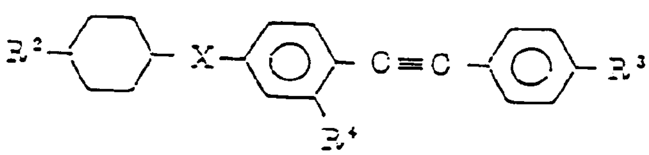 (II)

dargestellten Verbindungen umfaßt, worin $R^2$ eine Alkylgruppe mit 1 bis 10 Kohlenstoffatomen bedeutet, $R^3$ eine Alkylgruppe oder eine Alkoxygruppe mit jeweils 1 bis 10 Kohlenstoffatomen bedeutet, $R^4$ H oder F bedeutet, und X eine Einfachbindung oder $-CH_2CH_2-$ bedeutet.

2. Flüssigkristall-Zusammensetzung nach Anspruch 1, dadurch gekennzeichnet, daß der Mischungsanteil der ersten Komponente 20 bis 70 Gew.-% und der der zweiten Komponente 20 bis 50 Gew.-% beträgt.

3. Flüssigkristall-Zusammensetzung für eine superverdrillte Doppelbrechungseffekt-Anzeige, die als unabdingbare Komponenten die erste und zweite Komponente gemäß Anspruch 1 umfaßt, und außerdem eine dritte Komponente, die mindestens eine Verbindung umfaßt, ausgewählt aus der Gruppe bestehend aus Verbindungen dargestellt durch die Formel

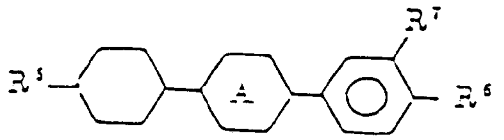

(III)

worin $R^5$ eine Alkylgruppe mit 1 bis 10 Kohlenstoffatomen bedeutet, $R^6$ F oder eine CN-Gruppe bedeutet, $R^7$ H oder F bedeutet,

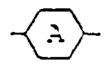

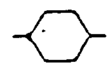

oder

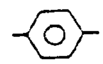

bedeutet,

und Verbindungen, dargestellt durch die Formel

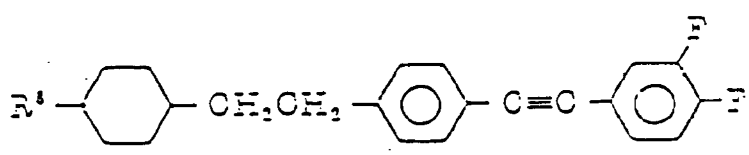

(IV)

worin $R^8$ eine Alkylgruppe mit 1 bis 10 Kohlenstoffatomen bedeutet.

4. Flüssigkristall-Zusammensetzung nach Anspruch 3, dadurch gekennzeichnet, daß die Mischungsanteile der ersten Komponente, der zweiten Komponente und der dritten Komponente 10 bis 60 Gew.-%, 10 bis 40 Gew.-% bzw. 10 bis 40 Gew.-% betragen.

5. Flüssigkristall-Zusammensetzung nach Anspruch 3 oder Anspruch 4, dadurch gekennzeichnet, daß die Verbindungen der Formel (III) solche sind, die dargestellt werden durch die Formel

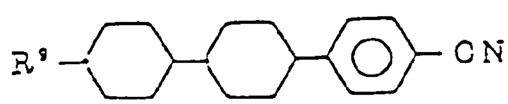

oder

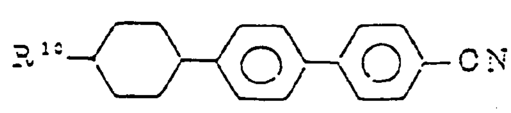

worin $R^9$ und $R^{10}$ unabhängig voneinander eine Alkylgruppe mit 1 bis 10 Kohlenstoffatomen bedeuten.

6. Flüssigkristall-Zusammmensetzung für eine superverdrillte Doppelbrechungseffekt-Anzeige, die als unabdingbare Komponenten die erste, zweite und dritte Komponente nach Anspruch 3 umfaßt, und ferner eine vierte Komponente, die mindestens eine der durch die Formel

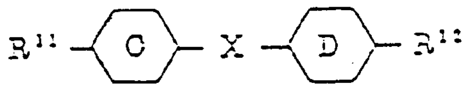 (V)

dargestellten Verbindungen umfaßt, worin $R^{11}$ und $R^{12}$ unabhängig voneinander eine Alkylgruppe, eine Alkoxygruppe und eine Alkoxymethylgruppe mit jeweils 1 bis 10 Kohlenstoffatomen bedeuten,

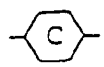 und 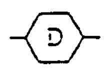

unabhängig voneinander

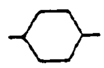 oder 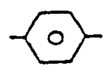 ,

und X eine Einfachbindung, -COO-, -C≡C- oder $-CH_2CH_2-$ bedeutet.

7. Flüssigkristall-Zusammensetzung nach Anspruch 6, dadurch gekennzeichnet, daß die Mischungsanteile der ersten, zweiten, dritten und vierten Komponenten 10 bis 60 Gew.-%, 10 bis 40 Gew.-%, 10 bis 40 Gew.-% bzw. 10 bis 40 Gew.-% betragen.

8. Flüssigkristall-Zusammensetzung nach Anspruch 6 oder Anspruch 7, dadurch gekennzeichnet, daß die vierte Komponente mindestens eine der durch die Formel

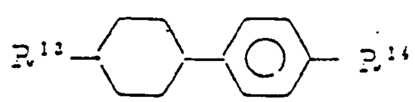

dargestellten Verbindungen ist, worin $R^{13}$ eine Alkylgruppe mit 1 bis 10 Kohlenstoffatomen bedeutet, und $R^{14}$ eine Alkoxygruppe mit 1 bis 10 Kohlenstoffatomen bedeutet.

9. Flüssigkristall-Anzeigeelement, das die Flüssigkristall-Zusammensetzung nach einem der Ansprüche 1 bis 8 verwendet.

## Revendications

1. Composition de cristaux liquides pour un affichage à effet de biréfringence super-torsadé comprenant comme constituants indispensables, un premier constituant comprenant au moins un composé choisi parmi ceux répondant à la formule :

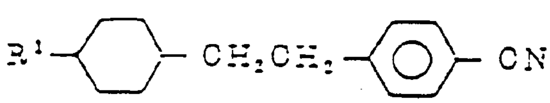 ( I )

dans laquelle $R^1$ représente un groupe alkyle ayant 1 à 10 atomes de carbone, et un second constituant comprenant au moins un composé parmi ceux répondant à la formule :

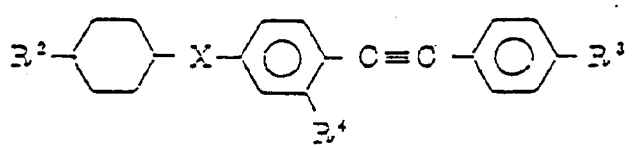 (II)

dans laquelle $R^2$ représente un groupe alkyle ayant 1 à 10 atomes de carbone, $R^3$ représente un groupe alkyle ou un groupe alcoxy ayant chacun 1 à 10 atomes de carbone, $R^4$ représente H ou F et X représente une simple liaison ou $-CH_2CH_2-$.

2. Composition de cristaux liquides selon la revendication 1, dans laquelle la proportion de mélange du premier constituant est de 20 à 70 % en poids et celle du second constituant est de 20 à 50 % en poids.

3. Composition de cristaux liquides pour un affichage à effet de biréfringence super-torsadé comprenant comme constituants indispensables les premier et second constituants indiqués dans la revendication 1, et en outre un troisième constituant comportant au moins un composé choisi parmi ceux répondant à la formule :

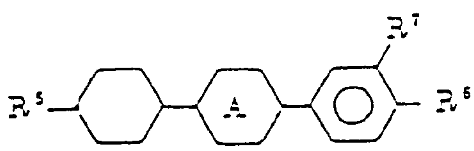 (III)

dans laquelle $R^5$ représente un groupe alkyle ayant 1 à 10 atomes de carbone, $R^6$ représente F ou un groupe CN, $R^7$ représente H ou F,

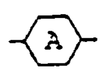

représente

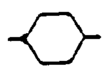 ou 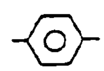,

et des composés répondant à la formule :

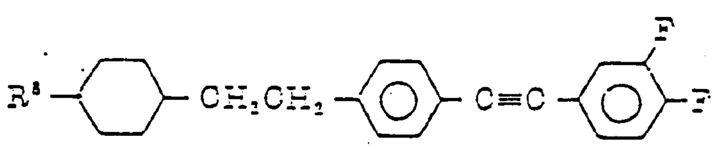 (IV)

dans laquelle $R^8$ représente un groupe alkyle ayant 1 à 10 atomes de carbone.

4. Composition de cristaux liquides selon la revendication 3, dans laquelle les proportions de mélange du premier constituant, du second constituant et du troisième constituant sont de 10 à 60 % en poids, de 10 à 40 % en poids et de 10 à 40 % en poids, respectivement.

5. Composition de cristaux liquides selon l'une quelconque des revendications 3 ou 4, dans laquelle les composés de la formule (III) sont ceux répondant aux formules :

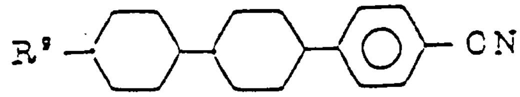

ou

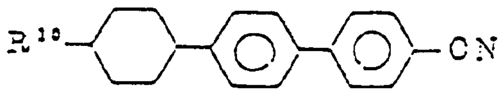

dans lesquelles $R^9$ et $R^{10}$ représentent chacun indépendamment un groupe alkyle ayant 1 à 10 atomes de carbone.

**6.** Composition de cristaux liquides pour un affichage à effet de biréfringence super-torsadé comprenant comme constituants indispensables, les premier, second et troisième constituants indiqués dans la revendication 3, et en outre un quatrième constituant comprenant au moins un composé choisi parmi ceux répondant à la formule :

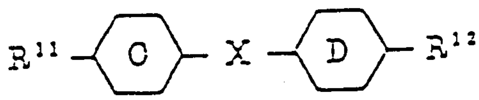 (V)

dans laquelle $R^{11}$ et $R^{12}$ représentent chacun indépendamment un groupe alkyle, un groupe alcoxy ou un groupe alcoxyméthyle ayant chacun 1 à 10 atomes de carbone,

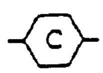 et 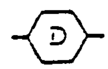

représentent indépendamment

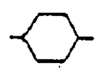 ou 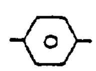

et X représente une simple liaison -COO-, -C≡C- ou $-CH_2CH_2-$.

**7.** Composition de cristaux liquides selon la revendication 6, dans laquelle les proportions de mélange des premier, second, troisième et quatrième constituants sont de 10 à 60 % en poids, de 10 à 40 % en poids, de 10 à 40 % en poids et de 10 à 40 % en poids, respectivement.

**8.** Composition de cristaux liquides selon les revendications 6 ou 7, dans laquelle le quatrième constituant est au moins un composé choisi parmi ceux répondant à la formule :

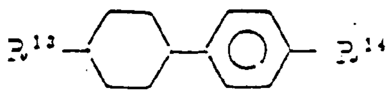

dans laquelle $R^{13}$ représente un groupe alkyle ayant 1 à 10 atomes de carbone et $R^{14}$ représente un groupe alcoxy ayant 1 à 10 atomes de carbone.

**9.** Elément d'affichage à cristaux liquides utilisant la composition de cristaux liquides telle qu'indiquée dans l'une quelconque des revendications 1 à 8.

FIG.1

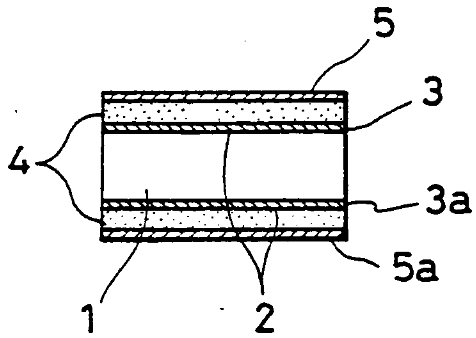


FIG.2